# EUROPÄISCHE PATENTSCHRIFT

(11) **EP 3 898 136 B1**
(45) Veröffentlichungstag und Bekanntmachung des Hinweises auf die Patenterteilung: **16.11.2022**
(21) Anmeldenummer: 19835383.1
(22) Anmeldetag: 19.12.2019
(51) Int. Cl.: B25J 21/00

(54) **ROBOTERTRANSPORTBOX**
ROBOT TRANSPORT BOX
BOÎTE DE TRANSPORT POUR ROBOT

(30) Priorität: 21.12.2018 DE 102018133448
(43) Veröffentlichungstag der Anmeldung: 27.10.2021
(73) Patentinhaber: Franka Emika GmbH, 80797 München (DE)
(72) Erfinder: LOINGER, Benjamin, 81379 München (DE)
(74) Vertreter: Rösler Rasch van der Heide & Partner
(86) Internationale Anmeldenummer: PCT/EP2019/086272
(87) Internationale Veröffentlichungsnummer: WO 2020/127705

(56) Entgegenhaltungen:
- US-A1- 2017 361 472
- US-B2- 9 326 406

## Beschreibung

Die Erfindung betrifft einen Roboterbehälter für einen Robotermanipulator, sowie ein Verfahren zum Konfigurieren eines solchen Roboterbehälters zum geschützten Transportieren des Robotermanipulators und ein Verfahren zum Konfigurieren eines solchen Roboterbehälters zum gegenüber einem Fußboden unverschieblichen Lagern des Robotermanipulators.

Verschiedene Roboterzellen sind im Stand der Technik bekannt.

Die US 2017 / 361472 A1 betrifft hierzu eine Roboterzelle, insbesondere für Demonstrationszwecke, umfassend einen Roboter, eine Basis, die eine Einheit zur Steuerung des Roboters trägt und eine Arbeitsfläche definiert, wo der Roboter betrieben wird; und eine Schutzabschirmung, die dafür ausgelegt ist, die Arbeitsfläche und den Roboter, der auf der Arbeitsfläche betrieben wird, von der äußeren Umgebung zu trennen; der Roboter der Roboterzelle wird außerdem durch ein System zur vertikalen Bewegung getragen und ist zwischen folgenden Positionen vertikal beweglich: Einer angehobenen Position, in welcher der Roboter auf der Arbeitsfläche betrieben werden kann, und einer abgesenkten Position, in welcher sich der Roboter unterhalb der Arbeitsfläche befindet und in der Basis enthalten ist;

Die US 9 326 406 B2 betrifft ferner eine Vorrichtung um eine Stütze für ein Display bereitzustellen und das Display zu stützen. Die Vorrichtung umfasst ein Transportgehäuse als Teil der Stütze um das Display zu halten, sowie mehrere Elemente innerhalb des Transportgehäuses, die die leichte und schnelle Aufstellung der Stütze erlauben.

Aufgabe der Erfindung ist es, den Transport und das Aufstellen eines Robotermanipulators zu vereinfachen.

Die Erfindung ergibt sich aus den Merkmalen der unabhängigen Ansprüche. Vorteilhafte Weiterbildungen und Ausgestaltungen sind Gegenstand der abhängigen Ansprüche.

Ein erster Aspekt der Erfindung betrifft einen Roboterbehälter, aufweisend ein Rechnergehäuse und ein Schutzgehäuse, wobei an einer ersten Außenseite des Rechnergehäuses eine Vielzahl von Rollen und eine erste Rechnergehäuseschnittstelle angeordnet sind und wobei an einer der ersten Außenseite gegenüberliegenden zweiten Außenseite des Rechnergehäuses ein Robotermanipulator und eine zweite Rechnergehäuseschnittstelle angeordnet sind, und wobei im Inneren des Rechnergehäuses eine mit dem Robotermanipulator verbundene Steuereinheit angeordnet ist, wobei an einer ersten Außenseite des Schutzgehäuses zumindest ein Aufstellelement zum Lagern des Schutzgehäuses auf einem Fußboden angeordnet ist und an einer der ersten Außenseite gegenüberliegenden zweiten Außenseite des Schutzgehäuses eine Öffnung zu einem vom Schutzgehäuse umfassten Hohlraum und eine Schutzgehäuseschnittstelle angeordnet sind, wobei die Schutzgehäuseschnittstelle mit wahlweise der ersten Rechnergehäuseschnittstelle oder mit der zweiten Rechnergehäuseschnittstelle reversibel verbindbar ist, sodass durch Einführen des Robotermanipulators in den Hohlraum des Schutzgehäuses und durch Fügen der Schutzgehäuseschnittstelle mit der zweiten Rechnergehäuseschnittstelle das Schutzgehäuse und das Rechnergehäuse einen über die Rollen verschiebbaren Transportbehälter bilden, und sodass durch Fügen der Schutzgehäuseschnittstelle mit der ersten Rechnergehäuseschnittstelle das Schutzgehäuse einen durch das zumindest eine Aufstellelement unverschieblichen Sockel für das Rechnergehäuse bildet.

Insbesondere bilden durch Einführen des Manipulators in den Hohlraum des Schutzgehäuses und durch Fügen der Schutzgehäuseschnittstelle mit der zweiten Rechnergehäuseschnittstelle das Schutzgehäuse und das Rechnergehäuse einen über die Rollen verschiebbaren und die Steuereinheit und den Robotermanipulator umschließenden Transportbehälter.

Gegenüber dem ersten Fall, dass das Schutzgehäuse und das Rechnergehäuse einen über die Rollen verschiebbaren Transportbehälter bilden, ist im zweiten Fall, nämlich dass das Schutzgehäuse eine über das zumindest eine Aufstellelement unverschieblichen Sockel für das Rechnergehäuse bildet, das Schutzgehäuse um eine horizontale Achse um 180° verdreht. Denn im zweiten Fall zeigt das zumindest eine Aufstellelement in Richtung Boden, und im ersten Fall nach oben vom Roboterbehälter weg. Dagegen kann bei der Umkonfiguration vom ersten zum zweiten Fall und umgekehrt das Rechnergehäuse seine Orientierung beibehalten.

Vorteilhaft sind die Rollen derart von einem Umfang des Rechnergehäuses beabstandet angeordnet, das heißt von der ersten Rechnergehäuseschnittstelle beabstandet angeordnet, dass die Rollen in das Schutzgehäuse im Bereich der Schutzgehäuseschnittstelle versenkbar sind. Vorteilhaft wird dadurch im zweiten Fall ein von außen glatter Sockel für den Robotermanipulator gebildet.

Die erste und die zweite Rechnergehäuseschnittstelle und die Schutzgehäuseschnittstelle sind im einfachsten Fall die jeweilige Stirnseite des jeweiligen Rechnergehäuses bzw. des Schutzgehäuses. Ferner sind an der ersten und zweiten Rechnergehäuseschnittstelle und an der Schutzgehäuseschnittstelle Steckelemente angeordnet, um ein Einstecken der Schutzgehäuseschnittstelle in die erste bzw. zweite Rechnergehäuseschnittstelle zu ermöglichen.

Vorteilhaft sind das Schutzgehäuse und/oder das Rechnergehäuse jeweils aus Holz, Metall, oder Kunststoff gefertigt.

Es ist eine vorteilhafte Wirkung der Erfindung, dass der Roboterbehälter in sehr kurzer Zeit von einer den Robotermanipulator und die Steuereinheit vollständig umschließenden und damit schützenden Transportbox zu einem Sockel zum Lagern des Robotermanipulators samt Steuereinheit umkonfiguriert werden kann. Vorteilhaft werden somit Material und Aufwand eingespart, und der Robotermanipulator ist zwischen verschiedenen Standorten schnell verlegbar.

Gemäß einer vorteilhaften Ausführungsform weist das Aufstellelement eine haftreibungsreiche Oberfläche auf.

Eine haftreibungsreiche Oberfläche weist einen im Vergleich zu Filzgleitern (Stuhlgleitern), wie sie von Stühlen und anderen Möbelstücken als Kratzschutz für einen Parkettboden bekannt sind, relativ hohen Haftreibungskoeffizienten auf. Bevorzugt wird Elastomerkunststoff, Hart-Gummi, oder vulkanisierter Kautschuk verwendet.

Gemäß einer weiteren vorteilhaften Ausführungsform sind das Schutzgehäuse und das Rechnergehäuse jeweils quaderförmig und die Schutzgehäuseschnittstelle und die erste Rechnergehäuseschnittstelle und die zweite Rechnergehäuseschnittstelle weisen jeweils einen rechteckigen Umfang auf.

Vorteilhaft sind durch die quaderförmige Bauweise mehrere Roboterbehälter leicht nebeneinander lagerbar und stapelbar.

Gemäß einer weiteren vorteilhaften Ausführungsform weist die Schutzgehäuseschnittstelle einen Absatz auf und die erste Rechnergehäuseschnittstelle und die zweite Rechnergehäuseschnittstelle weisen jeweils eine Kante, wobei der Absatz an der jeweiligen Kante anordenbar ist. Alternativ, aber äquivalent dazu, weisen gemäß dieser Ausführungsform die erste Rechnergehäuseschnittstelle und die zweite Rechnergehäuseschnittstelle jeweils einen Absatz auf und die Schutzgehäuseschnittstelle eine Kante, wobei der jeweilige Absatz an der Kante anordenbar ist.

Kante und Absatz bewirken insbesondere vorteilhaft, dass die jeweilige Rechnergehäuseschnittstelle und die Schutzgehäuseschnittstelle durch unterschiedliche Radien an Kante und Absatz für eine gewisse Strecke aneinander vorbei schiebbar sind, um am Ende dieser Strecke aufeinander zu liegen und radial fixiert und axial jederzeit durch Auseinanderziehen voneinander lösbar zu sein.

Gemäß einer weiteren vorteilhaften Ausführungsform ist die Schutzgehäuseschnittstelle mit wahlweise der ersten Rechnergehäuseschnittstelle oder mit der zweiten Rechnergehäuseschnittstelle durch zumindest eines aus Schnappverschluss, Klemmverschluss, oder Schraubverschluss reversibel verbindbar.

Gemäß einer weiteren vorteilhaften Ausführungsform sind genau vier Rollen am Rechnergehäuse angeordnet, und die Rollen sind gegenüber dem Rechnergehäuse um eine Achse senkrecht zu einer Drehachse der Rollen rotierbar gelagert.

Gemäß einer weiteren vorteilhaften Ausführungsform sind an zwei gegenüberliegenden Seiten des Schutzgehäuses Haltegriffe angeordnet.

Die Haltegriffe sind bevorzugt gegenüber dem Schutzgehäuse derart verdrehbar gelagert, dass das Schutzgehäuse um die Drehachse des jeweiligen Haltegriffs gedreht werden kann, wobei die Drehung insbesondere derart gerichtet ist, dass sich die Schutzgehäuseschnittstelle um 180° um die Drehachse des jeweiligen Haltegriffs rotieren lässt. Dadurch wird vorteilhaft die Drehung des Schutzgehäuses zum Umkonfigurieren des Roboterbehälters, wie oben erläutert, erleichtert.

Gemäß einer weiteren vorteilhaften Ausführungsform verläuft eine den beiden Haltegriffen gemeinsame Drehachse durch den Schwerpunkt des Schutzgehäuses.

Ein weiterer Aspekt der Erfindung betrifft ein Verfahren zum Konfigurieren eines Roboterbehälters zum geschützten Transportieren eines Robotermanipulators, wobei der Roboterbehälter ein Rechnergehäuse und ein Schutzgehäuse aufweist, wobei an einer ersten Außenseite des Rechnergehäuses eine Vielzahl von Rollen und eine erste Rechnergehäuseschnittstelle angeordnet sind und wobei an einer der ersten Außenseite gegenüberliegenden zweiten Außenseite des Rechnergehäuses der Robotermanipulator und eine zweite Rechnergehäuseschnittstelle angeordnet sind, und wobei im Inneren des Rechnergehäuses eine mit dem Robotermanipulator verbundene Steuereinheit angeordnet ist, wobei an einer ersten Außenseite des Schutzgehäuses zumindest ein Aufstellelement zum Lagern des Schutzgehäuses auf einem Fußboden angeordnet ist und an einer der ersten Außenseite gegenüberliegenden zweiten Außenseite des Schutzgehäuses eine Öffnung zu einem vom Schutzgehäuse umfassten Hohlraum und eine Schutzgehäuseschnittstelle angeordnet sind, wobei die Schutzgehäuseschnittstelle mit wahlweise der ersten Rechnergehäuseschnittstelle oder mit der zweiten Rechnergehäuseschnittstelle reversibel verbindbar ist, aufweisend die Schritte:
- Einführen des Robotermanipulators in den Hohlraum des Schutzgehäuses, und
- Fügen der Schutzgehäuseschnittstelle mit der zweiten Rechnergehäuseschnittstelle.

Vorteile und bevorzugte Weiterbildungen des vorgeschlagenen Verfahrens ergeben sich durch eine analoge und sinngemäße Übertragung der im Zusammenhang mit dem vorgeschlagenen Roboterbehälter vorstehend gemachten Ausführungen.

Ein weiterer Aspekt der Erfindung betrifft ein Verfahren zum Konfigurieren eines Roboterbehälters zum gegenüber einem Fußboden unverschieblichen Lagern eines Robotermanipulators, wobei der Roboterbehälter ein Rechnergehäuse und ein Schutzgehäuse aufweist, wobei an einer ersten Außenseite des Rechnergehäuses eine Vielzahl von Rollen und eine erste Rechnergehäuseschnittstelle angeordnet sind und wobei an einer der ersten Außenseite gegenüberliegenden zweiten Außenseite des Rechnergehäuses ein Robotermanipulator und eine zweite Rechnergehäuseschnittstelle angeordnet sind, und wobei im Inneren des Rechnergehäuses eine mit dem Robotermanipulator verbundene Steuereinheit angeordnet ist, wobei an einer ersten Außenseite des Schutzgehäuses zumindest ein Aufstellelement zum Lagern des Schutzgehäuses auf einem Fußboden angeordnet ist und an einer der ersten Außenseite gegenüberliegenden zweiten Außenseite des Schutzgehäuses eine Öffnung zu einem vom Schutzgehäuse umfassten Hohlraum und eine Schutzgehäuseschnittstelle angeordnet sind, wobei die Schutzgehäuseschnittstelle mit wahlweise der ersten Rechnergehäuseschnittstelle oder mit der zweiten Rechnergehäuseschnittstelle reversibel verbindbar ist, aufweisend den Schritt:
- Fügen der Schutzgehäuseschnittstelle mit der ersten Rechnergehäuseschnittstelle.

Vorteile und bevorzugte Weiterbildungen des vorgeschlagenen Verfahrens ergeben sich durch eine analoge und sinngemäße Übertragung der im Zusammenhang mit dem vorgeschlagenen Roboterbehälter vorstehend gemachten Ausführungen.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Gleiche, ähnliche und/oder funktionsgleiche Teile sind mit gleichen Bezugszeichen versehen.

Es zeigen:
- Fig. 1A bis 1D: einen Roboterbehälter als durchsichtiges Gittermodell in verschiedenen Konfigurationsphasen gemäß einem Ausführungsbeispiel der Erfindung,
- Fig. 2A und 2D: einen Roboterbehälter in undurchsichtiger Seitenansicht in verschiedenen Konfigurationen gemäß einem weiteren Ausführungsbeispiel der Erfindung,
- Fig. 3: ein Verfahren zum Konfigurieren eines Roboterbehälters zum geschützten Transportieren eines Robotermanipulators, und
- Fig. 4: ein Verfahren zum Konfigurieren eines Roboterbehälters zum gegenüber einem Fußboden unverschieblichen Lagern eines Robotermanipulators.

Die Darstellungen in den Figuren sind schematisch und nicht maßstäblich.

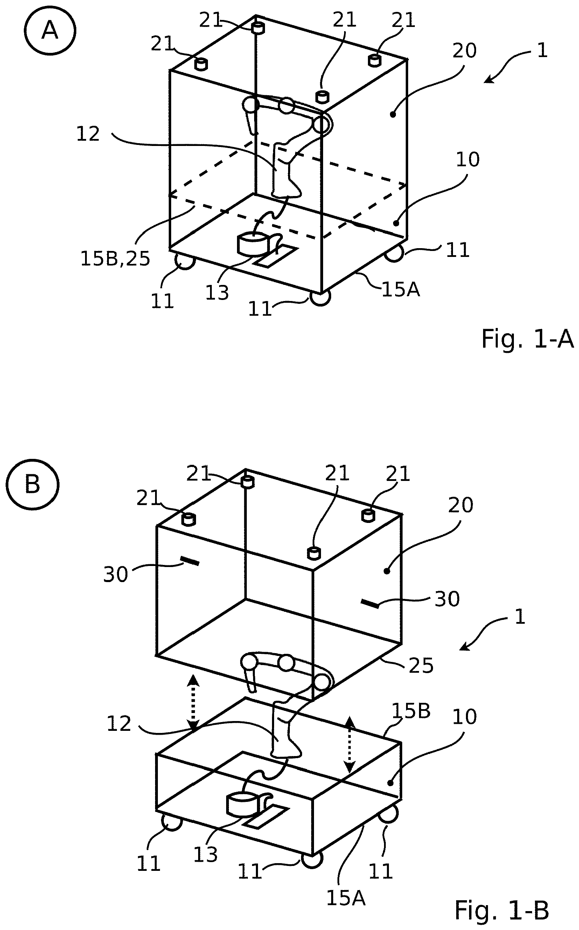

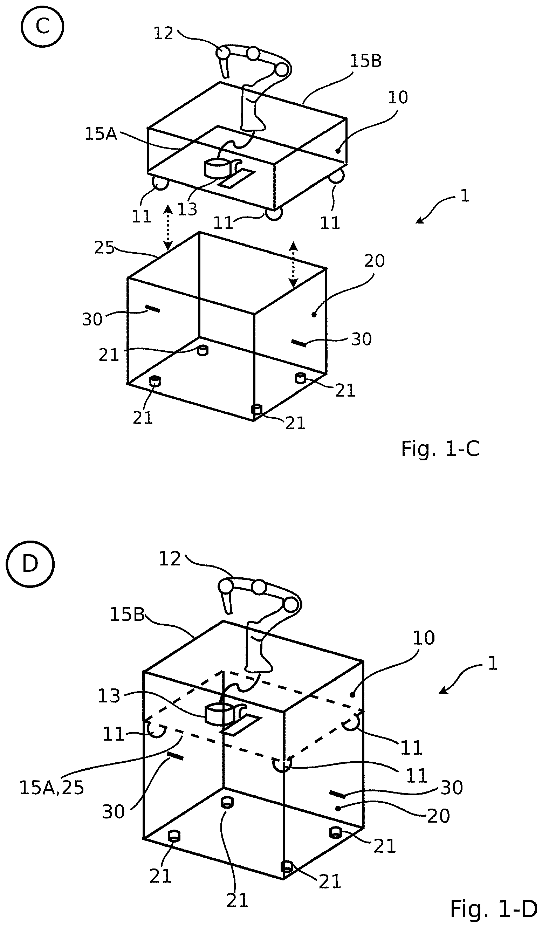

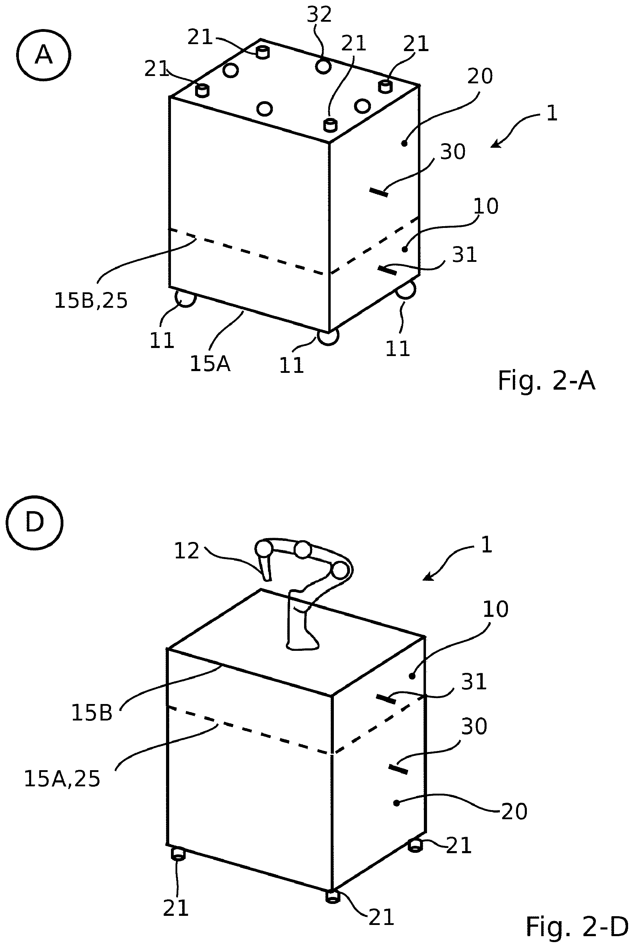

Fig. 1A bis 1D zeigen die einzelnen Zustände des Roboterbehälters 1 in einem Drahtgittermodell, wie sie erfolgen wenn von einem Zustand des Roboterbehälters 1, in dem der Roboterbehälter 1 als verschieblicher Transportbehälter zum geschützten Transportieren des Robotermanipulators 12 dient, zu einem Zustand, in dem dieser als Sockel für einen Robotermanipulator 12 konfiguriert wird, umkonfiguriert wird. Fig. 2A und 2D zeigen dabei den Anfangszustand und Endzustand des Roboterbehälters 1 bei einer solchen umkehrbaren Umkonfiguration in räumlicher Ansicht. Der Roboterbehälter 1 weist ein Rechnergehäuse 10 und ein Schutzgehäuse 20 auf. Schutzgehäuse 20 und Rechnergehäuse 10 sind jeweils quaderförmig. Das Rechnergehäuse 10 umschließt dabei die Steuereinheit 13 für den Robotermanipulator 12. In jeder Konfigurationsphase verbleibt die Steuereinheit 13 im Rechnergehäuse 10. Das Schutzgehäuse 20 dient zum optionalen Abdecken des Robotermanipulators 12 von oben bzw. zum Bilden eines Sockels für das Rechnergehäuse 10. An einer ersten Außenseite des Rechnergehäuses 10, der Unterseite, sind eine Vielzahl von Rollen 11 und eine erste Rechnergehäuseschnittstelle 15A angeordnet. An einer der ersten Außenseite gegenüberliegenden zweiten Außenseite des Rechnergehäuses 10, also an der Oberseite des Rechnergehäuses 10, sind ein Robotermanipulator 12 und eine zweite Rechnergehäuseschnittstelle 15B angeordnet, wobei im Inneren des Rechnergehäuses 10 die mit dem Robotermanipulator 12 verbundene Steuereinheit 13 angeordnet ist. An einer ersten Außenseite des Schutzgehäuses 20 sind vier aus Elastomerkunststoff gefertigte Aufstellelemente 21 zum Lagern des Schutzgehäuses 20 auf einem Fußboden angeordnet und an einer der ersten Außenseite gegenüberliegenden zweiten Außenseite des Schutzgehäuses 20 eine Öffnung zu einem vom Schutzgehäuse 20 umfassten Hohlraum und eine Schutzgehäuseschnittstelle 25 angeordnet, wobei die Schutzgehäuseschnittstelle 25 mit wahlweise der ersten Rechnergehäuseschnittstelle 15A oder mit der zweiten Rechnergehäuseschnittstelle 15B reversibel verbindbar ist. Die erste Rechnergehäuseschnittstelle 15A und die zweite Rechnergehäuseschnittstelle 15B weisen hierbei jeweils einen Absatz auf, so dass die Stirnseite des Schutzgehäuses 20 an der Schutzgehäuseschnittstelle 25 wahlweise an die Stirnseite des Rechnergehäuses 10 im Bereich der ersten Rechnergehäuseschnittstelle 15A oder im Bereich der zweiten Rechnergehäuseschnittstelle 15B anordenbar ist, wobei der jeweilige Absatz jeweils die Stirnseiten gegenüber radialem verrutschen sichert. Der Begriff "radial" bezeichnet hierbei eine Richtung, die in der Fügeebene der Schutzgehäuseschnittstelle 25 und der jeweiligen Rechnergehäuseschnittstelle 15A,15B liegt. Die Schutzgehäuseschnittstelle 25 und die erste Rechnergehäuseschnittstelle 15A und die zweite Rechnergehäuseschnittstelle 15B weisen jeweils einen rechteckigen Umfang auf. Die Rollen 11 sind so angeordnet, dass sie in das Innere des Schutzgehäuses 20 versenkbar sind, sodass beim Zusammenfügen der ersten Rechnergehäuseschnittstelle 15A mit der Schutzgehäuseschnittstelle 25 die Rollen 11 von außen nicht mehr sichtbar sind. In Fig. 1-A und Fig. 2-A bilden hierbei das Schutzgehäuse 20 und das Rechnergehäuse 10 einen über die Rollen 11 verschiebbaren Transportbehälter. Der Robotermanipulator 12 ist in dem vom Schutzgehäuse 20 gebildeten Hohlraum angeordnet und wird vom Schutzgehäuse 20 umschlossen und geschützt. Die Rollen 11 liegen hierbei am Fußboden auf und lassen den Roboterbehälter 1 leicht verschieben. In diesem Zustand sind die Schutzgehäuseschnittstelle 25 und die zweite Rechnergehäuseschnittstelle 15B miteinander verbunden. Fig. 1-B zeigt den nächsten Schritt für einen Anwender, um den Robotermanipulator 12 zugänglich zu machen und auf einem Sockel unverschieblichen gegenüber dem Fußboden zu lagern. Dazu wird das Schutzgehäuse 20 vom Rechnergehäuse 10 abgenommen, um 180° um die Haltegriffe 30 gedreht und mit den Aufstellelementen 21 voraus auf den Fußboden abgestellt. Dies ist in Fig. 1-C zu sehen, wobei anschließend das Rechnergehäuse 10 auf das Schutzgehäuse 20 aufgesetzt wird, während der Robotermanipulator 12 seine Orientierung zu einer horizontalen Ebene beibehalten kann. Hierzu werden die erste Rechnergehäuseschnittstelle 15A und die Schutzgehäuseschnittstelle 25 aneinander gefügt. Das Ergebnis ist in Fig. 1-D und in Fig. 2-D gezeigt. Zusätzlich ist in den Fig. 2-A und Fig. 2-D ein weiteres Paar Haltegriffe 31 gezeigt, welche am Rechnergehäuse 10 angeordnet sind. Ferner sind in der Ebene der Aufstellelemente 21 vier Befestigungsösen 32 zur möglichen Fixierung des Schutzgehäuses 20 und damit auch zur Fixierung des Roboterbehälters 1 beim Transport angeordnet.

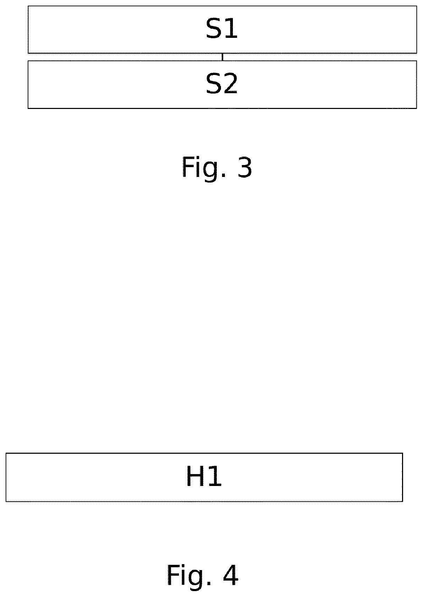

Fig. 3 zeigt ein Verfahren zum Konfigurieren eines Roboterbehälters 1 zum geschützten Transportieren eines Robotermanipulators 12, wobei der Roboterbehälter 1 ein Rechnergehäuse 10 und ein Schutzgehäuse 20 aufweist, wobei an einer ersten Außenseite des Rechnergehäuses 10 eine Vielzahl von Rollen 11 und eine erste Rechnergehäuseschnittstelle 15A angeordnet sind und wobei an einer der ersten Außenseite gegenüberliegenden zweiten Außenseite des Rechnergehäuses 10 der Robotermanipulator 12 und eine zweite Rechnergehäuseschnittstelle 15B angeordnet sind, und wobei im Inneren des Rechnergehäuses 10 eine mit dem Robotermanipulator 12 verbundene Steuereinheit 13 angeordnet ist, wobei an einer ersten Außenseite des Schutzgehäuses 20 zumindest ein Aufstellelement 21 zum Lagern des Schutzgehäuses 20 auf einem Fußboden angeordnet ist und an einer der ersten Außenseite gegenüberliegenden zweiten Außenseite des Schutzgehäuses 20 eine Öffnung zu einem vom Schutzgehäuse 20 umfassten Hohlraum und eine Schutzgehäuseschnittstelle 25 angeordnet sind, wobei die Schutzgehäuseschnittstelle 25 mit wahlweise der ersten Rechnergehäuseschnittstelle 15A oder mit der zweiten Rechnergehäuseschnittstelle 15B reversibel verbindbar ist, aufweisend die Schritte: Einführen S1 des Robotermanipulators 12 in den Hohlraum des Schutzgehäuses 20, und Fügen S2 der Schutzgehäuseschnittstelle 25 mit der zweiten Rechnergehäuseschnittstelle 15B.

Fig. 4 zeigt ein Verfahren zum Konfigurieren eines Roboterbehälters 1 zum gegenüber einem Fußboden unverschieblichen Lagern eines Robotermanipulators 12, wobei der Roboterbehälter 1 ein Rechnergehäuse 10 und ein Schutzgehäuse 20 aufweist, wobei an einer ersten Außenseite des Rechnergehäuses 10 eine Vielzahl von Rollen 11 und eine erste Rechnergehäuseschnittstelle 15A angeordnet sind und wobei an einer der ersten Außenseite gegenüberliegenden zweiten Außenseite des Rechnergehäuses 10 ein Robotermanipulator 12 und eine zweite Rechnergehäuseschnittstelle 15B angeordnet sind, und wobei im Inneren des Rechnergehäuses 10 eine mit dem Robotermanipulator 12 verbundene Steuereinheit 13 angeordnet ist, wobei an einer ersten Außenseite des Schutzgehäuses 20 zumindest ein Aufstellelement 21 zum Lagern des Schutzgehäuses 20 auf einem Fußboden angeordnet ist und an einer der ersten Außenseite gegenüberliegenden zweiten Außenseite des Schutzgehäuses 20 eine Öffnung zu einem vom Schutzgehäuse 20 umfassten Hohlraum und eine Schutzgehäuseschnittstelle 25 angeordnet sind, wobei die Schutzgehäuseschnittstelle 25 mit wahlweise der ersten Rechnergehäuseschnittstelle 15A oder mit der zweiten Rechnergehäuseschnittstelle 15B reversibel verbindbar ist, aufweisend den Schritt: Fügen H1 der Schutzgehäuseschnittstelle 25 mit der ersten Rechnergehäuseschnittstelle 15A.

Obwohl die Erfindung im Detail durch bevorzugte Ausführungsbeispiele näher illustriert und erläutert wurde, so ist die Erfindung nicht durch die offenbarten Beispiele eingeschränkt. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Der Schutzbereich wird durch die Ansprüche definiert.

### Bezugszeichenliste

- 1: Roboterbehälter
- 10: Rechnergehäuse
- 11: Rollen
- 12: Robotermanipulator
- 13: Steuereinheit
- 15A: erste Rechnergehäuseschnittstelle
- 15B: zweite Rechnergehäuseschnittstelle
- 20: Schutzgehäuse
- 21: Aufstellelement
- 25: Schutzgehäuseschnittstelle
- 30: Haltegriffe
- 31: Haltegriffe
- 32: Befestigungsöse

- S1: Einführen
- S2: Fügen
- H1: Fügen

## Patentansprüche

1. Roboterbehälter (1), aufweisend
- ein Rechnergehäuse (10), und
- ein Schutzgehäuse (20),
wobei an einer ersten Außenseite des Rechnergehäuses (10) eine Vielzahl von Rollen (11) und eine erste Rechnergehäuseschnittstelle (15A) angeordnet sind und wobei an einer der ersten Außenseite gegenüberliegenden zweiten Außenseite des Rechnergehäuses (10) ein Robotermanipulator (12) und eine zweite Rechnergehäuseschnittstelle (15B) angeordnet sind, und wobei im Inneren des Rechnergehäuses (10) eine mit dem Robotermanipulator (12) verbundene Steuereinheit (13) angeordnet ist,
wobei an einer ersten Außenseite des Schutzgehäuses (20) zumindest ein Aufstellelement (21) zum Lagern des Schutzgehäuses (20) auf einem Fußboden angeordnet ist und an einer der ersten Außenseite gegenüberliegenden zweiten Außenseite des Schutzgehäuses (20) eine Öffnung zu einem vom Schutzgehäuse (20) umfassten Hohlraum und eine Schutzgehäuseschnittstelle (25) angeordnet sind, wobei die Schutzgehäuseschnittstelle (25) mit wahlweise der ersten Rechnergehäuseschnittstelle (15A) oder mit der zweiten Rechnergehäuseschnittstelle (15B) reversibel verbindbar ist.

2. Roboterbehälter (1) nach Anspruch 1,
wobei das Aufstellelement (21) eine haftreibungsreiche Oberfläche aufweist.

3. Roboterbehälter (1) nach einem der vorhergehenden Ansprüche,
wobei das Schutzgehäuse (20) und das Rechnergehäuse (10) jeweils quaderförmig sind und die Schutzgehäuseschnittstelle (25) und die erste Rechnergehäuseschnittstelle (15A) und die zweite Rechnergehäuseschnittstelle (15B) jeweils einen rechteckigen Umfang aufweisen.

4. Roboterbehälter (1) nach einem der vorhergehenden Ansprüche,
wobei die Schutzgehäuseschnittstelle (25) einen Absatz aufweist und die erste Rechnergehäuseschnittstelle (15A) und die zweite Rechnergehäuseschnittstelle (15B) jeweils eine Kante aufweisen, wobei der Absatz an der jeweiligen Kante anordenbar ist, oder wobei die erste Rechnergehäuseschnittstelle (15A) und die zweite Rechnergehäuseschnittstelle (15B) jeweils einen Absatz aufweisen und die Schutzgehäuseschnittstelle (25) eine Kante aufweist, wobei der jeweilige Absatz an der Kante anordenbar ist.

5. Roboterbehälter (1) nach einem der vorhergehenden Ansprüche,
wobei die Schutzgehäuseschnittstelle (25) mit wahlweise der ersten Rechnergehäuseschnittstelle (15A) oder mit der zweiten Rechnergehäuseschnittstelle (15B) durch zumindest eines aus Schnappverschluss, Klemmverschluss, oder Schraubverschluss reversibel verbindbar ist.

6. Roboterbehälter (1) nach einem der vorhergehenden Ansprüche,
wobei genau vier Rollen (11) am Rechnergehäuse (10) angeordnet sind, und die Rollen (11) gegenüber dem Rechnergehäuse (10) um eine Achse senkrecht zu einer Rotationsachse der Rollen (11) rotierbar gelagert sind.

7. Roboterbehälter (1) nach einem der vorhergehenden Ansprüche,
wobei an zwei gegenüberliegenden Seiten des Schutzgehäuses (20) Haltegriffe (30) angeordnet sind.

8. Roboterbehälter (1) nach Anspruch 7,
wobei eine den beiden Haltegriffen (30) gemeinsame Rotationsachse durch den Schwerpunkt des Schutzgehäuses (20) verläuft.

9. Verfahren zum Konfigurieren eines Roboterbehälters (1) zum geschützten Transportieren eines Robotermanipulators (12), wobei der Roboterbehälter (1) ein Rechnergehäuse (10) und ein Schutzgehäuse (20) aufweist, wobei an einer ersten Außenseite des Rechnergehäuses (10) eine Vielzahl von Rollen (11) und eine erste Rechnergehäuseschnittstelle (15A) angeordnet sind und wobei an einer der ersten Außenseite gegenüberliegenden zweiten Außenseite des Rechnergehäuses (10) der Robotermanipulator (12) und eine zweite Rechnergehäuseschnittstelle (15B) angeordnet sind, und wobei im Inneren des Rechnergehäuses (10) eine mit dem Robotermanipulator (12) verbundene Steuereinheit (13) angeordnet ist, wobei an einer ersten Außenseite des Schutzgehäuses (20) zumindest ein Aufstellelement (21) zum Lagern des Schutzgehäuses (20) auf einem Fußboden angeordnet ist und an einer der ersten Außenseite gegenüberliegenden zweiten Außenseite des Schutzgehäuses (20) eine Öffnung zu einem vom Schutzgehäuse (20) umfassten Hohlraum und eine Schutzgehäuseschnittstelle (25) angeordnet sind,
wobei die Schutzgehäuseschnittstelle (25) mit wahlweise der ersten Rechnergehäuseschnittstelle (15A) oder mit der zweiten Rechnergehäuseschnittstelle (15B) reversibel verbindbar ist, aufweisend die Schritte:
- Einführen (S1) des Robotermanipulators (12) in den Hohlraum des Schutzgehäuses (20), und
- Fügen (S1) der Schutzgehäuseschnittstelle (25) mit der zweiten Rechnergehäuseschnittstelle (15B).

10. Verfahren zum Konfigurieren eines Roboterbehälters (1) zum gegenüber einem Fußboden unverschieblichen Lagern eines Robotermanipulators (12), wobei der Roboterbehälter (1) ein Rechnergehäuse (10) und ein Schutzgehäuse (20) aufweist, wobei an einer ersten Außenseite des Rechnergehäuses (10) eine Vielzahl von Rollen (11) und eine erste Rechnergehäuseschnittstelle (15A) angeordnet sind und wobei an einer der ersten Außenseite gegenüberliegenden zweiten Außenseite des Rechnergehäuses (10) ein Robotermanipulator (12) und eine zweite Rechnergehäuseschnittstelle (15B) angeordnet sind, und wobei im Inneren des Rechnergehäuses (10) eine mit dem Robotermanipulator (12) verbundene Steuereinheit (13) angeordnet ist,
wobei an einer ersten Außenseite des Schutzgehäuses (20) zumindest ein Aufstellelement (21) zum Lagern des Schutzgehäuses (20) auf einem Fußboden angeordnet ist und an einer der ersten Außenseite gegenüberliegenden zweiten Außenseite des Schutzgehäuses (20) eine Öffnung zu einem vom Schutzgehäuse (20) umfassten Hohlraum und eine Schutzgehäuseschnittstelle (25) angeordnet sind, wobei die Schutzgehäuseschnittstelle (25) mit wahlweise der ersten Rechnergehäuseschnittstelle (15A) oder mit der zweiten Rechnergehäuseschnittstelle (15B) reversibel verbindbar ist, aufweisend den Schritt:
- Fügen (H1) der Schutzgehäuseschnittstelle (25) mit der ersten Rechnergehäuseschnittstelle (15A).

## Claims

1. Robot container (1) comprising:
- a computer housing (10), and
- a protective housing (20),
wherein a plurality of rollers (11) and a first computer housing interface (15A) are arranged on a first outer side of the computer housing (10) and wherein a robot manipulator (12) and a second computer housing interface (15B) are arranged on a second outer side of the computer housing (10), and wherein a control unit (13) connected to the robot manipulator (12) is arranged inside the computer housing (10),
wherein at least one installation element (21) for mounting the protective housing (20) on a floor is arranged on a first outer side of the protective housing (20) and an opening to a cavity encompassed by the protective housing (20) and a protective housing interface (25) are arranged on a second outer side of the protective housing opposite the first outer side (20), wherein the protective housing interface (25) can be reversibly connected to either the first computer housing interface (15A) or to the second computer housing interface (15B).

2. Robot container (1) according to Claim 1,
wherein the installation element (21) comprises a stiction-rich surface.

3. Robot container (1) according to any one of the preceding claims,
wherein the protective housing (20) and the computer housing (10) are each cuboid and the protective housing interface (25) and the first computer housing interface (15A) and the second computer housing interface (15B) each comprise a rectangular circumference.

4. Robot container (1) according to any one of the preceding claims,
wherein the protective housing interface (25) comprises a section and the first computer housing interface (15A) and the second computer housing interface (15B) each comprise an edge, wherein the section can be arranged on the respective edge, or wherein the first computer housing interface (15A) and the second computer housing interface (15B) each comprise one section and the protective housing interface (25) comprises an edge, wherein the respective section can be arranged on the edge.

5. Robot container (1) according to any one of the preceding claims,
wherein the protective housing interface (25) can be reversibly connected to either the first computer housing interface (15A) or to the second computer housing interface (15B) by at least one snap closure, clamp closure, or screw cap respectively.

6. Robot container (1) according to any one of the preceding claims,
wherein exactly four rollers (11) are arranged on the computer housing (10), and the rollers (11) are rotatable in relation to the computer housing (10) around one axis perpendicular to a rotational axis of the rollers (11).

7. Robot container (1) according to any one of the preceding claims, wherein grip handles (30) are arranged on two opposite sides of the protective housing (20) .

8. Robot container (1) according to Claim 7, wherein a rotational axis common to the two grip handles (30) runs through the centre of gravity of the protective housing (20).

9. Method for configuring a robot container (1) for the protected transport of a robot manipulator (12), wherein the robot container (1) comprises a computer housing (10) and a protective housing (20), wherein a plurality of rollers (11) and a first computer housing interface (15A) are arranged on a first outer side of the computer housing (10) and wherein a robot manipulator (12) and a second computer housing interface (15B) are arranged on a second outer side of the computer housing (10), and wherein a control unit (13) connected to the robot manipulator (12) is arranged inside the computer housing (10), wherein at least one installation element (21) for mounting the protective housing (20) on a floor is arranged on a first outer side of the protective housing (20) and an opening to a cavity encompassed by the protective housing (20) and a protective housing interface (25) are arranged on a second outer side of the protective housing opposite the first outer side (20), wherein the protective housing interface (25) is reversibly connectable to either the first computer housing interface (15A) or to the second computer housing interface (15B), comprising the steps:
- inserting (S1) of the robot manipulator (12) into the cavity of the protective housing (20), and
- joining (S1) of the protective housing interface (25) to the second computer housing interface (15B) .

10. Method for configuring a robot container (1) for mounting a robot manipulator (12) to the floor in an unmoveable manner, wherein the robot container (1) comprises a computer housing (10) and a protective housing (20), wherein a plurality of rollers (11) and a first computer housing interface (15A) are arranged on a first outer side of the computer housing (10) and wherein a robot manipulator (12) and a second computer housing interface (15B) are arranged on a second outer side of the computer housing (10) located across from a first outer side, and wherein a control unit (13) connected to the robot manipulator (12) is arranged inside the computer housing (10),
wherein at least one installation element (21) for mounting the protective housing (20) on a floor is arranged on a first outer side of the protective housing (20) and an opening to a cavity encompassed by the protective housing (20) and a protective housing interface (25) are arranged on a second outer side of the protective housing opposite the first outer side (20), wherein the protective housing interface (25) is reversibly connectable to either the first computer housing interface (15A) or to the second computer housing interface (15B), comprising the step:
- joining (H1) of the protective housing interface (25) to the first computer housing interface (15A).

## Revendications

1. Conteneur pour robot (1) comportant
- un boîtier d'ordinateur (10) et
- un boîtier de protection (20),
sachant que sur un premier côté extérieur du boîtier d'ordinateur (10), sont disposées une pluralité de roulettes (11) et une première interface de boîtier d'ordinateur (15A) et sachant que sur un deuxième côté extérieur du boîtier d'ordinateur (10) opposé au premier côté extérieur sont disposés un manipulateur de robot (12) et une deuxième interface de boîtier d'ordinateur (15B) et sachant qu'à l'intérieur du boîtier d'ordinateur (10) est disposée une unité de commande (13) reliée au manipulateur de robot (12),
sachant que sur un premier côté extérieur du boîtier de protection (20) est disposé au moins un élément de montage (21) pour loger le boîtier de protection (20) sur un fond et sur un deuxième côté extérieur du boîtier de protection (20) opposé au premier côté extérieur sont disposées une ouverture vers un espace creux entouré par le boîtier de protection (20) et une interface de boîtier de protection (25), sachant que l'interface de boîtier de protection (25) peut être reliée au choix à la première interface de boîtier d'ordinateur (15A) ou de façon réversible à la deuxième interface de boîtier d'ordinateur (15B).

2. Conteneur pour robot (1) selon la revendication 1, sachant que l'élément de montage (21) comporte une surface à coefficient d'adhérence élevé.

3. Conteneur pour robot (1) selon l'une quelconque des revendications précédentes,
sachant que le boîtier de protection (20) et le boîtier d'ordinateur (10) sont respectivement de forme parallélépipédique et l'interface de boîtier de protection (25) et la première interface de boîtier d'ordinateur (15A) et la deuxième interface de boîtier d'ordinateur (15B) comportent respectivement une périphérie rectangulaire.

4. Conteneur pour robot (1) selon l'une quelconque des revendications précédentes,
sachant que l'interface de boîtier de protection (25) comporte un décrochement et la première interface de boîtier d'ordinateur (15A) et la deuxième interface de boîtier d'ordinateur (15B) comportent respectivement un bord, sachant que le décrochement peut être disposé sur le bord respectif ou sachant que la première interface de boîtier d'ordinateur (15A) et la deuxième interface de boîtier d'ordinateur (15B) comportent respectivement un décrochement et l'interface de boîtier de protection (25) comporte un bord, sachant que le décrochement respectif peut être disposé sur le bord.

5. Conteneur pour robot (1) selon l'une quelconque des revendications précédentes,
sachant que l'interface de boîtier de protection (25) peut être reliée au choix à la première interface de boîtier d'ordinateur (15A) ou de façon réversible à la deuxième interface de boîtier d'ordinateur (15B) par au moins une fermeture à déclic, une fermeture par serrage ou une fermeture à vis.

6. Conteneur pour robot (1) selon l'une quelconque des revendications précédentes,
sachant qu'exactement quatre roulettes (11) sont disposées sur le boîtier d'ordinateur (10) et les roulettes (11) sont logées face au boîtier d'ordinateur (10) pouvant tourner autour d'un axe perpendiculairement à un axe de rotation des roulettes (11) .

7. Conteneur pour robot (1) selon l'une quelconque des revendications précédentes, sachant que des poignées (30) sont disposées sur les deux côtés opposés du boîtier de protection (20).

8. Conteneur pour robot (1) selon la revendication 7, sachant qu'un axe de rotation commun aux deux poignées (30) passe par le centre de gravité du boîtier de protection (20).

9. Procédé de configuration d'un conteneur pour robot (1) pour le transport protégé d'un manipulateur de robot (12), sachant que le conteneur pour robot (1) comporte un boîtier d'ordinateur (10) et un boîtier de protection (20), sachant que sur un premier côté extérieur du boîtier d'ordinateur (10) sont disposées une pluralité de roulettes (11) et une première interface de boîtier d'ordinateur (15A) et sachant que sur un deuxième côté extérieur du boîtier d'ordinateur (10) opposé au premier côté extérieur sont disposés le manipulateur de robot (12) et une deuxième interface de boîtier d'ordinateur (15B) et sachant qu'à l'intérieur du boîtier d'ordinateur (10) est disposée une unité de commande (13) reliée au manipulateur de robot (12), sachant que sur un premier côté extérieur du boîtier de protection (20) est disposé au moins un élément de montage (21) pour loger le boîtier de protection (20) sur un fond et sur deuxième côté extérieur du boîtier de protection (20) opposé au premier côté extérieur, sont disposées une ouverture vers un espace creux entourés par le boîtier de protection (20) et une interface de boîtier de protection (25), sachant que l'interface de boîtier de protection (25) peut être reliée au choix à la première interface de boîtier d'ordinateur (15A) ou de façon réversible à la deuxième interface de boîtier d'ordinateur (15B), comportant les étapes de :
- introduction (S1) du manipulateur de robot (12) dans l'espace creux du boîtier de protection (20) et
- assemblage (S1) de l'interface de boîtier de protection (25) avec la deuxième interface de boîtier d'ordinateur (15B).

10. Procédé de configuration d'un conteneur pour robot (1) pour le logement fixe face à un fond d'un manipulateur de robot (12), sachant que le conteneur de robot (1) comporte un boîtier d'ordinateur (10) et un boîtier de protection (20), sachant que sur un premier côté extérieur du boîtier d'ordinateur (10) sont disposées une pluralité de roulettes (11) et une première interface de boîtier d'ordinateur (15A) et sachant que sur un deuxième côté extérieur du boîtier d'ordinateur (10) opposé au premier côté extérieur, sont disposés un manipulateur de robot (12) et une deuxième interface de boîtier d'ordinateur (15B) et sachant qu'à l'intérieur du boîtier d'ordinateur (10) est disposée une unité de commande (13) reliée au manipulateur de robot (12),
sachant que sur un premier côté extérieur du boîtier de protection (20) est disposé au moins un élément de montage (21) pour loger le boîtier de protection (20) sur un fond et sur un deuxième côté extérieur du boîtier de protection (20) opposé au premier côté extérieur, sont disposées une ouverture vers un espace creux entouré par le boîtier de protection (20) et une interface de boîtier de protection (25), sachant que l'interface de boîtier de protection (25) peut être reliée au choix à la première interface de boîtier d'ordinateur (15A) ou de façon réversible à la deuxième interface de boîtier d'ordinateur (15B), comportant l'étape de :
- assemblage (H1) de l'interface de boîtier de protection (25) avec la première interface de boîtier d'ordinateur (15A).
